# EUROPÄISCHE PATENTANMELDUNG

(11) **EP 1 318 462 A1**
(43) Veröffentlichungstag der Anmeldung: **11.06.2003**
(21) Anmeldenummer: 01129110.1
(22) Anmeldetag: 07.12.2001
(51) Int. Cl.: G06F 17/30

(54) **Verfahren zur Verwaltung und Recherche von Daten**

(71) Anmelder: Patent-Treuhand-Gesellschaft für elektrische Glühlampen mbH, 81543 München (DE)
(72) Erfinder: Schmidt-Fischer, Robert, 82266 Inning (DE)

(57) **Zusammenfassung**

Die vorliegende Erfindung betrifft ein Verfahren zur Verwaltung und Recherche von Daten, die Objekte eines physikalischen Systems betreffen, bei dem zunächst für die Objekte eine Klassifizierungshierarchie definiert wird, wobei die Elemente einer unteren Klassifizierungsebene alle Objekteigenschaften aller darüber liegenden Klassifizierungsebenen umfassen. Anschließend wird eine unterste Klassifizierungsebene der Objekte definiert und die Objekte der untersten Klassifizierungsebene durch Codierung in einen Identifikator dargestellt, wobei der Identifikator derart aufgebaut ist, daß sich unterschiedliche Filter entsprechend unterschiedlichen Abstraktionsregeln auf ihn anwenden lassen. Sie betrifft überdies ein entsprechendes Computerprogramm mit Programmcode-Mitteln, insbesondere gespeichert auf einem computerlesbaren Datenträger.

## Beschreibung

### Technisches Gebiet

Die vorliegende Erfindung betrifft ein Verfahren zur Verwaltung und Recherche von Daten, insbesondere Stammdaten, die Objekte eines physikalischen Systems betreffen.

Stammdaten sind eine der Hauptgrundlagen jeder modernen Datenverarbeitung. Während durchschnittlich nur rund zehn Prozent der Datenverarbeitungsergebnisse von den einzelnen zu verarbeitenden Geschäftsvorfällen abhängen, sogenannte Bewegungsdaten, also variabel, sind, bestehen die restlichen neunzig Prozent aus gleichbleibenden Daten, den sogenannten Stammdaten. Von ihrer Verfügbarkeit und Qualität wird der Unternehmenserfolg erheblich beeinflußt. Stammdaten betreffen immer Objekte, materielle sowie immaterielle, wobei es zwischen allen Objekten Beziehungen gibt. Die Art der Beziehung bestimmt, ob Objekte als Stammdaten relevante Eigenschaften haben, die mit den Eigenschaften eines oder mehrerer anderer Objekte identisch sind und daher auch insoweit identische Stammdaten erfordern. Die Verwaltung und Recherche dieses komplexen Beziehungsgeflechts innerhalb einer Objektgesamtheit, zum Beispiel dem Produktspektrum eines Industrieunternehmens, wird bisher nicht oder völlig unzureichend unterstützt. Dies birgt erhebliche Risiken für ein Unternehmen.

Je geringer nämlich die Softwareunterstützung, desto größer ist der Bedarf an Mitarbeitern, die durch ein entsprechendes, meist nicht schnell erwerbbares Spezialwissen sowie hohe Konzentration und Ausdauer dazu beitragen müssen, eine angemessene Stammdatenqualität zu erzeugen und aufrecht zu erhalten. Trotzdem entstehende Fehler, durch systematische Suche oder zufällig entdeckt, müssen in mehr oder minder aufwendigen Sonderaktionen behoben werden, um Schädigungen des Unternehmens vorzubeugen oder diese schnellstens wieder zu beenden.

Im Hinblick auf die Recherche führen alle über Standardabfragen hinausgehenden Recherchewünsche zu Programmieraufwand oder bleiben unbefriedigt.

### Stand der Technik

Aus dem Stand der Technik ist der Gebrauch sogenannter Lochkarten bekannt, jenen Datenträgern, auf denen im Regelfall maximal 80 Zeichen gespeichert werden können. Außer einer Zeichenfolge zur Identifizierung des jeweiligen Objekts, dem sogenannten Identifikator, können darauf weitere Informationen gespeichert werden. Den Identifikator kann eine reine Zählnummer oder eine sortierbare Nummer oder eine Mischform hieraus repräsentieren. Die weiteren Daten können aus Stammdaten oder aus Bewegungsdaten oder aus einer Mischung der beiden Datenkategorien bestehen. Um die Lochkarten maschinell in eine Reihenfolge zu bringen, die mit den Mitteln der Lochkartentechnik die Bildung von Gruppen - bei Bedarf mit Zwischensummen je Gruppe - erlaubt, müssen die für die Reihenfolge maßgebenden Merkmale, die sogenannten Sortiermerkmale, auf den einzelnen Lochkarten vorhanden sein. Dies wird realisiert im Identifikator selbst, der dann der gewünschten Sortierung dienende Zeichen enthalten, also- zumindest insoweit - "sortierbar" sein muß, und/oder in den weiteren Daten, die dann die für die gewünschte Sortierung benötigten Daten - im Regelfall Stammdaten - enthalten müssen. Um Identifikatoren unterschiedlichen Gruppierungen zuordnen zu können, sind pro Identifikator mehrere Lochkarten erforderlich, falls die unterschiedlichen Sortiermerkmale wegen der auf 80 Stellen begrenzten Speichermöglichkeit nicht je Identifikator auf derselben Lochkarte Platz haben. Da die auf den Lochkarten gespeicherten Daten, soweit sie nicht durch Duplizieren von anderen Lochkarten stammen, je Lochkarte einzeln erfaßt werden müssen, ist ein großer personeller Aufwand erforderlich, um sicher zu stellen, daß jede Lochkarte die richtigen Daten enthält, insbesondere daß auf jeder Lochkarte mit Stammdaten diese tatsächlich zu dem jeweiligen Identifikator gehören und aktuell sind.

Die weitere Entwicklung der Stammdatenverwaltung bis zum heutigen Stand der Technik diente im Schwerpunkt der Beschleunigung von Datenerfassung und Datenwiedergewinnung. Mit dem Ersatz von Riesenmengen an Lochkarten, sogenannten Lochkarten-Dateien, durch Datensätze auf Magnetbändern, sogenannte Banddateien, ergibt sich unter anderem als Vorteil, daß Band-Datensätze nicht mehr wie Lochkarten auf 80 Zeichen beschränkt sind. Dadurch können je Identifikator im Regelfall alle zugehörigen Stammdaten in einem einzigen Band-Datensatz gespeichert werden. Mit dem Ersatz von Banddateien durch sogenannte Plattendateien ergeben sich unter anderem weitere Beschleunigungseffekte. So sind zum Beispiel nunmehr die Vorgabe, Erfassung und Überprüfung eines Datenbestandes im Regelfall nicht mehr auf mehrere Personen verteilt, sondern erfolgen im Direktzugriff auf die jeweilige Datei in einem Arbeitsgang. Unterstützung bei der Datenerfassung, die in der "Lochkarten-Ära" durch teilweises Duplizieren von Lochkarten und in der "Magnetband-Ära" sowie beim Übergang auf Plattendateien durch individuelle Programmierung ermöglicht werden konnte, ist heutzutage Teil der Standardsoftware: So kann zum Beispiel in der SAP-Standardsoftware R/2 und R/3 ein vorhandener Stammdaten-Satz aufgerufen, durch Eingabe eines neuen Identifikators dupliziert und im Bereich der hierdurch übernommenen Stammdaten modifiziert werden. Selbst wenn diese Modifikationen auf formale Richtigkeit, zum Beispiel Einhaltung der zulässigen Zeichenanzahl je Datenfeld, überprüft werden, bleibt die inhaltliche Richtigkeit im Regelfall ungeprüft. Insbesondere muß die Konsistenz von Stammdaten, die aus logischen Gründen bei mehreren Identifikatoren identisch sein oder in einem bestimmten Verhältnis zueinander stehen müssen, im Regelfall weiterhin personell sichergestellt werden. Da sich die Zahl der je Objekt für speicherungswürdig gehaltenen Stammdaten seit der "Lochkarten-Ära" vervielfacht hat und die Komplexität der Beziehungen zwischen den einzelnen Stammdaten dadurch erheblich zunahm, ist der für die Erreichung von Datenkonsistenz erforderliche Aufwand extrem angewachsen. Unternehmen, die sich diesen Aufwand nicht leisten können oder wollen, laufen Gefahr, durch Dateninkonsistenz Schaden in nicht vorhersagbarer Größenordnung zu erleiden.

Der Aufwand zur Beseitigung und künftigen Vermeidung von Dateninkonsistenz hängt unter anderem vom Umfang der Datenredundanz im jeweiligen System ab. In der "Lochkarten-Ära" ergab sich ein Schwerpunkt der Inkonsistenz aus der Tatsache, daß für Recherchen unterschiedlicher Zielgruppen zum selben Objekt parallel mehrere Lochkarten (mit zum Teil identischen Stammdaten) erstellt wurden, die nicht synchron aktuell gehalten wurden. Diese Fehlerquelle versiegt bei nur einmaliger Speicherung jedes Stammdatums eines Objekts, wie sie seit der Einführung von Banddateien und Plattendateien möglich ist. Unverändert geblieben und in der Wirkung sogar noch wesentlich verstärkt ist dagegen, daß bei Stammdaten-Änderungen, die aus logischen Gründen nicht nur einen Identifikator betreffen, Dateninkonsistenz entsteht, wenn die Änderung nicht bei allen betroffenen Identifikatoren gleichzeitig erfolgt oder sogar bei einzelnen der betroffenen Identifikatoren ganz unterbleibt.

### Darstellung der Erfindung

Der vorliegenden Erfindung liegt daher die Aufgabe zugrunde, das eingangs genannte Verfahren derart weiterzubilden, daß es eine weitgehende Vermeidung von Redundanz und damit die weitgehende Sicherstellung der Konsistenz der Daten ermöglicht.

Zur Lösung dieser Aufgabe wird erfindungsgemäß bei dem gattungsgemäßen Verfahren zunächst eine Klassifizierungshierarchie für die Objekte des physikalischen Systems definiert, wobei die Elemente einer unteren Klassifizierungsebene, die ihrerseits reale oder virtuelle Objekte sind, neben den auf dieser unteren Klassifizierungsebene differenzierenden Objekteigenschaften auch die Eigenschaften der Elemente aller darüber liegenden Klassifizierungsebenen umfassen, von denen sie abstammen. Anschließend wird eine unterste Klassifizierungsebene der Objekte definiert und schließlich die Objekte der untersten Klassifizierungsebene durch Codierung in einen Identifikator dargestellt, wobei der Identifikator derart aufgebaut ist, daß sich unterschiedliche Filter entsprechend unterschiedlichen Abstraktionsregeln auf ihn anwenden lassen.

Unter Identifikator ist im Sinne der Erfindung die elektronische Repräsentierung eines Objekts oder von Gruppierungen von Objekten zu verstehen.

Die Eigenschaften der Elemente dieser untersten Klassifizierungsebene, die auf jeden Fall Objekte des physikalischen Systems sind, dienen sowohl der Objektdefinition als auch als Basis für Filter, die entsprechend unterschiedlichen Abstraktionsregeln unterschiedliche Ausschnitte aus der Objektgesamtheit ermitteln. Der Flexibilität des erfindungsgemäßen Verfahrens im Hinblick zum Beispiel auf Mehrsprachigkeit und/oder auf etwaige künftige Verfeinerungen der Objektdefinition dient die Codierung einzelner Objekteigenschaften und sinnvoll gebildeter Gruppen von Objekteigenschaften auf grundsätzlich allen Klassifizierungsebenen. Durch Bezugnahme der Filter auf diese Identifikatoren, in denen sich Eigenschaften der Objekte widerspiegeln, sind sie funktionell unabhängig von der verwendeten Sprache oder von etwaigen Veränderungen im Definitionsumfang der Objekte.

Dem erfindungsgemäßen Verfahren liegt die Erkenntnis zugrunde, daß die Möglichkeit von Dateninkonsistenz mit abnehmender Datenredundanz schwindet und daß die sachliche Richtigkeit von Stammdaten mit zunehmender Beachtung logischer Strukturen der Objekteigenschaften grundsätzlich zunimmt. Deshalb beginnt bevorzugt jede Implementierung des erfindungsgemäßen Verfahrens mit der Feststellung der logischen Beziehungen der Objekteigenschaften untereinander und Festlegung der geeigneten Klassifizierungshierarchie. Anschließend werden als Stammdaten die festzulegenden Objekteigenschaften in einem vorgefertigten Beziehungsmuster in geprüftem Umfang plausibel, redundanzfrei und insoweit konsistent einmalig erfaßt sowie später gegebenenfalls fallweise ergänzt. Die Speicherung der Stammdaten erfolgt also objektbezogen hierarchisch und unter Berücksichtigung ihrer logischen Zusammenhänge. Durch die Vererbung von Objekteigenschaften auf Elemente einer weiter unten liegenden Ebene der Klassifizierungshierarchie genügt bei Änderung einer Objekteigenschaft deren einmalige Änderung auf der Ebene, wo sie erstmalig auftritt und von wo sie weitervererbt wird.

Dadurch, daß sich bei diesem Verfahren das Beziehungsgeflecht der Objekte untereinander widerspiegelt, werden die Schwächen des Stands der Technik beseitigt: Zum einen werden die Ansprüche an die Anzahl und Qualifikation der mit der Verwaltung der Stammdaten operativ befaßten Mitarbeiter eines Unternehmens reduziert, wodurch eine Dezentralisierung erleichtert wird, bei gleichzeitiger Verminderung der Fehleranfälligkeit. Dies resultiert in einer größeren Wirtschaftlichkeit der Stammdatenverwaltung sowie in einer Erhöhung der Stammdatenqualität. Zum anderen wird die Möglichkeit eröffnet, für die Recherche von Stammdaten ein universelles, flexibel zu handhabendes Werkzeug zur Verfügung zu stellen, das in wenigen Schritten die gewünschten Informationen liefert.

Bevorzugt sind zumindest Objekte einer Klassifizierungsebene ungleich der untersten ebenfalls durch Identifikatoren codiert, wobei auch diese Indentifikatoren derart aufgebaut sind, daß sich unterschiedliche Filter entsprechend unterschiedlichen Abstraktionsregeln auf sie anwenden lassen, und wobei dem Identifikator eines Objekts der höheren Klassifizierungsebene die Identifikatoren der in der Klassifizierungshierarchie darunter liegenden Klassifizierungsebenen, insbesondere ebenenweise bis zur untersten Klassifizierungsebene, zugeordnet werden. Diese Maßnahme ermöglicht im Hinblick auf die weiter unten ausführlicher besprochene Recherche die Ermittlung von Treffern nicht nur auf der untersten Klassifizierungsebene, sondern auch von darüber liegenden Klassifizierungsebenen. Hierdurch ergibt sich eine übersichtlichere Darstellung und damit leichtere Auswertbarkeit des Rechercheergebnisses.

Besonders bevorzugt ist zur Realisierung einer völligen Redundanzfreiheit, das heißt nicht nur einer Reduktion der Redundanz gegenüber dem bekannten Stand der Technik, daß jedes Objekt des physikalischen Systems durch genau einen Identifikator repräsentiert wird und umgekehrt.

Bevorzugt ist weiterhin, wenn zunächst die Beziehungen zwischen mindestens zwei Objekten analysiert werden und dann, in Anbetracht des Ergebnisses der Analyse, die zu erfassenden Objekteigenschaften der Objekte definiert werden.

Bei einer besonders bevorzugten Ausführungsform wird die Erfassung der Objekte mit ihren Objekteigenschaften dadurch unterstützt, daß eine Eingabemaske bereitgestellt wird, wobei in die Eingabemaske zur Erzeugung der Identifikatoren Muß- und Kanndaten (Eingabe der Daten obligatorisch bzw. fakultativ) eingebbar sind und zumindest die Eingabe der Mußdaten überwacht und sichergestellt wird. Die eingegebenen Objekteigenschaften werden dann codiert und führen zum Aufbau des Identifikators

Bevorzugt werden mindestens zwei Klassifizierungshierarchien definiert, wobei mindestens ein Identifikator der ersten Klassifizierungshierarchie eine Entsprechung in der mindestens einen zweiten Klassifizierungshierarchie aufweist. Bevorzugt ist hierbei eine Klassifizierungshierarchie sachorientiert aufgebaut und mindestens eine weitere Klassifizierungshierarchie anwendungsorientiert. Die Objekte der jeweils untersten Klassifizierungsebene werden im Folgenden als Einzeltypen bezeichnet. Die sachorientierte Klassifizierungshierarchie ist unter allen Klassifizierungshierarchien führend, wobei die hierin definierten Einzeltypen die Voraussetzung und die Grundlage aller anwendungsorientierten Hierarchien, im nachfolgenden Eigenschaften-Hierarchien, bilden. Hierbei sind zwei Alternativen zu unterscheiden: Zum einen können die Identifikatoren so aufgebaut sein, daß sich in ihnen unmittelbar alle Information betreffend die sachorientierte und die anwendungsorientierten Klassifizierungshierarchien widerspiegeln, d.h. bei einer Recherche nach anwendungsorientierten Eigenschaften des Objekts können diese unmittelbar aus den Identifikatoren abgelesen werden. Zum anderen können einem Identifikator eines Einzeltyps der sachbeorientierten sachorientierten Klassifizierungshierarchie Identifikatoren von Einzeltypen der anwendungsorientierten Klassifizierungshierarchien zugeordnet sein, so daß bei einer Recherche über diese Zuordnung die zu dem sachorientierten Identifikator gehörenden anwendungsorientierten Eigenschaften mittelbar abgefragt werden können. Die letztgenannte Variante resultiert in einem einfacheren, kürzeren und damit leichter recherchierbaren Aufbau der Identifikatoren.

Bevorzugt werden bei der Erfassung der Objekte mit einer Eingabemaske die Eigenschaften des Objekts in den unterschiedlichen Klassifizierungshierarchien erfaßt und Verknüpfungen betreffend das erfaßte Objekt zwischen den unterschiedlichen Klassifizierungshierarchien und innerhalb der jeweiligen Klassifizierungshierarchien, insbesondere mit der über und unter der Eingabeebene liegenden Klassifizierungsebene, hergestellt.

Im Hinblick auf den Einsatz des erfindungsgemäßen Verfahrens bei Industrieunternehmen ist es bevorzugt, wenn die Objekte der untersten Klassifizierungsebene, sogenannte Einzeltypen, zumindest Objekteigenschaften aufweisen, die eine Auswahl aus den folgenden Gebieten umfassen: objektorientierte Objekteigenschaften, marktorientierte Objekteigenschaften, beschaffungsorientierte Objekteigenschaften sowie kostenorientierte Objekteigenschaften.

Bei der Implementierung des erfindungsgemäßen Verfahrens ist es bevorzugt, wenn nach der Analyse der Beziehungen zwischen mindestens zwei Objekten festgelegt wird, welche Eigenschaften der Objekte zu erfassen sind, welcher Hierarchie (der sachorientierten oder einer der anwendungsorientierten) die einzelnen Eigenschaften zuzuordnen sind und welcher Ebene in der zutreffenden Hierarchie sie angehören.

Die objektorientierten Objekteigenschaften enthalten bevorzugt Informationen zum Zeichnungstyp und/oder zur zeichnungsunwirksamen Ausführung und/oder zur Qualität des Objekts und/oder zu dessen Verpackung und/oder zur Kennzeichnung von Objekt und Verpackung. Bevorzugt ist, wenn nur sie in der sachorientierten Klassifizierungshierarchie berücksichtigt und grundsätzlich nicht geändert werden. Die dadurch stabile Beziehung zwischen den Identifikatoren der Einzeltypen und den sie definierenden objektorientierten Eigenschaften ist die Grundvoraussetzung dafür, daß jedes Objekt des physikalischen Systems - wie oben zur Redundanzvermeidung gefordert - durch genau einen Identifikator repräsentiert werden kann und umgekehrt sowie daß alle nur unter Bezug auf Identifikatoren gespeicherten Bewegungsdaten - den gesetzlichen Anforderungen entsprechend - jederzeit mit demselben Ergebnis interpretiert werden können.

Die oberste Ebene insbesondere in der sachorientierten Klassifizierungshierarchie bilden vorzugsweise sogenannte Objektklassen, in die alle Objekte, insbesondere auch immaterielle Objekte, zweifelsfrei einordenbar sein müssen. Zwischen einer Objektklasse und der untersten Klassifizierungsebene können weitere Klassifizierungsebenen vorhanden sein, ausgehend von der Klassifizierungsebene Objektklasse insbesondere die Klassifizierungsebene Objektfamilie und daran anschließend die Klassifizierungsebene Objektgruppe sowie nach weiterer Differenzierung die Klassifizierungsebene Grundtyp. Ein derartiger hierarchischer Aufbau stellt nicht nur die Voraussetzung für die redundanzfreie oder zumindest eine redundanzarme Speicherung von Objekteigenschaften dar, sondern bietet die Möglichkeit, die dateneingebende Person bei der Eingabe durch entsprechende übersichtliche Menüs, insbesondere Auswahlmenüs, zu unterstützen und ermöglicht daher, eine schnelle und dennoch logisch klar gegliederte Eingabe von Stammdaten zu unterstützen. Denn bei einer besonders bevorzugten Ausführungsform wird die Erfassung der Objekte mit ihren Objekteigenschaften dadurch unterstützt, daß eine Eingabemaske bereitgestellt wird, wobei in die Eingabemaske zur Erzeugung der Identifikatoren Muß- und Kanndaten eingebbar sind und zumindest die Eingabe der Mußdaten überwacht und sichergestellt wird. Die eingegebenen Ausprägungen der Objekteigenschaften werden dann codiert und führen zum Aufbau des Identifikators. Bevorzugt werden bei dieser mittels Eingabemaske geführten Erfassung von Objekteigenschaften automatisch die vorgesehenen Verknüpfungen mit anderen Ebenen der Klassifizierungshierarchie und im Rahmen festlegbarer Algorithmen auch zu bestimmten Objekteigenschaften in Eigenschaften-Hierarchien hergestellt. Andererseits ermöglicht ein derartiger hierarchischer Aufbau auch eine einfache Recherche, wie weiter unten noch genauer ausgeführt werden wird.

Die marktorientierten Objekteigenschaften enthalten bevorzugt Informationen zur EAN-Hierarchie und/oder zur marktorientierten Artikeldefinition und/oder zu marktorientierten Artikelgruppierungen der Objekte. Diese Objekteigenschaften werden zum Bestandteil einer marktorientierten Eigenschaften-Hierarchie, deren unterste Ebene ebenfalls die Einzeltypen bilden. Die Beziehungen zwischen den Einzeltypen und den darüber liegenden Ebenen der marktorientierten Eigenschaften-Hierarchie können im Rahmen festzulegender Regeln sich ändernden Markterfordernissen angepaßt werden, ohne daß dies die eineindeutige Beziehung zwischen den Einzeltypen und den sie definierenden objektorientierten Eigenschaften in der sachorientierten Klassifizierungshierarchie tangiert.

Die beschaffungsorientierten Objekteigenschaften enthalten bevorzugt Informationen zur Beschaffungsart und/oder zum Konfektionierungsort und/oder zum Ursprungshinweis und/oder zum bilanziellen Ursprung und/oder zu weiteren beschaffungsorientierten Eigenschaften des Objekts. Diese Objekteigenschaften werden zum Bestandteil einer beschaffungsorientierten Eigenschaften-Hierarchie, in deren unterster Ebene sich wiederum die Einzeltypen finden. Für deren Beziehung zu den darüber liegenden Ebenen der beschaffungsorientierten Eigenschaften-Hierarchie gilt sinngemäß dasselbe wie zu der marktorientierten Eigenschaften-Hierarchie ausgeführt.

Die kostenorientierten Objekteigenschaften enthalten bevorzugt Informationen zur Kalkulationsart und/oder zur Kostenstelle und/oder zum Herstellungswerk und/oder zu weiteren kostenorientierten Eigenschaften des Objekts. Diese Objekteigenschaften werden zum Bestandteil einer kostenorientierten Eigenschaften-Hierarchie, für die sinngemäß dasselbe gilt wie bei den beiden vorgenannten anwendungsorientierten Eigenschaften-Hierarchien.

Die zur Objektdefinition verwendete und deshalb führende sachorientierte Klassifizierungshierarchie steht über die dort originären Einzeltypen mit den nach festzulegenden Regeln änderbaren anwendungsbezogenen Eigenschaften-Hierarchien in einer Beziehung, die es erlaubt, Einzeltypen mit aus mehr als einer dieser Hierarchien ausgewählten Eigenschaften zu recherchieren.

Eine einfache Ausdehnung auf bisher nicht erfaßte Objekteigenschaften und/oder bisher nicht erfaßte Ausprägungen erfaßbarer Objekteigenschaften, das heißt eine einfache Adaptierbarkeit des Systems, wird dadurch bereitgestellt, daß mindestens eine vorgegebene Klassifizierungsebene von einer dazu berechtigten Person um mindestens ein Element dieser Klassifizierungsebene erweiterbar ist.

Besonders einfach lassen sich die unterschiedlichen Filter entsprechend den unterschiedlichen Abstraktionsregeln auf die Identifikatoren anwenden, wenn jeder Identifikator aus einem Basisteil und mindestens einem Zusatzteil aufgebaut ist, derart, daß der Basisteil und/oder der mindestens eine Zusatzteil durch die unterschiedlichen Filter abprüfbar sind. Da erfindungsgemäß beim Aufbau der Identifikatoren relative und/oder absolute Schlüssel verwendet werden können, besteht eine bevorzugte Alternative hierzu darin, den Basisteil und mindestens einen Zusatzteil über einen relativen oder absoluten Schlüssel derart abzubilden, daß er nach wie vor die für die Recherche relevanten Eigenschaften erkennen läßt.

Der mindestens eine Zusatzteil entspricht bevorzugt sachorientierten und/oder anwendungsorientierten, insbesondere objektorientierten und/oder marktorientierten und/oder beschaffungsorientierten und/oder kostenorientierten Objekteigenschaften.

Bei einer bevorzugten Ausführungsform der Erfindung sind alle Identifikatoren in einer einzigen Datenbank zusammengefaßt. Dies wird durch die weitgehende Redundanzfreiheit der Datenverwaltung gemäß der vorliegenden Erfindung ermöglicht und erlaubt eine besonders einfache Aktualisierung und Anfertigung von Sicherungskopien.

Eine besonders bevorzugte Ausführungsform der vorliegenden Erfindung sieht vor, daß für die Recherche ein Filter erzeugt und auf die Identifikatoren angewendet wird. Bevorzugt wird für die Erzeugung des Filters als erstes eine Eingabemaske bereitgestellt, in der eine Bedienperson wahlweise aus einem Verzeichnis "Favoriten" oder einem Verzeichnis "Schlagwort" den gewünschten Filtertyp auswählt oder mit Hilfe eines aufrufbaren Suchbaumes oder durch Markieren einer der angezeigten Objektklassen sowie einer der angezeigten Objektarten (das heißt einer Ebene der sachorientierten Klassifizierungshierarchie oder einer Ebene einer der anwendungsorientierten Eigenschaften-Hierarchien) den Datenbereich definiert, in dem recherchiert werden soll. Nach diesem ersten Schritt wird eine zweite Eingabemaske bereitgestellt, in der die Bedienperson die zu recherchierenden Ausprägungen zu mindestens einer der - passend zum vorher definierten Datenbereich - angezeigten recherchierbaren Objekteigenschaften einzugeben hat. Diese Maßnahme ermöglicht die Durchführung einer Recherche ohne Programmieraufwand, das heißt insbesondere ohne Programmierkenntnisse, so daß die Recherche auch von Personen durchgeführt werden kann, die so gut wie keine Kenntnis vom Aufbau und von der Struktur der Datenbank haben.

Weiter erleichtert wird die Recherche, wenn zur Eingabe der zu recherchierenden Objekteigenschaften und/oder Ausprägungen bestimmter Objekteigenschaften auf der Eingabemaske angezeigt werden kann, welche Ausprägungen überhaupt vorhanden sind, aus denen die Person auswählen kann, oder wenn logische Bedingungen wie zum Beispiel "nicht größer als" eingegeben werden können. Die Person braucht also keinerlei Vorkenntnisse zu haben von den Objekteigenschaften, wie sie für die vorliegende Datenbank definiert wurden, und deren existierenden Ausprägungen.

In Anbetracht der von der Bedienperson eingegebenen Filtereigenschaften wird vom Verfahren erfindungsgemäß ein Filter für die Recherche erzeugt, und die Identifikatoren werden auf die Erfüllung der Filtereigenschaften geprüft, wobei zunächst die Trefferzahl, das heißt die Anzahl der Objekte, deren Identifikatoren die Filtereigenschaften erfüllen, der Bedienperson angezeigt wird. Für den Fall, daß der Bedienperson die Trefferzahl zu groß oder zu klein ist, ist es besonders vorteilhaft, wenn die Bedienperson durch Eingabe weiterer oder durch Löschung bisher im Filter berücksichtigter Objekteigenschaften den auf die Identifikatoren anzuwendenen Filter so verändern kann, daß die Trefferzahl den Recherchewünschen entspricht. Zu der von der Bedienperson akzeptierten Trefferzahl können die in dieser Trefferzahl enthaltenen Objekte wahlweise unmittelbar als EXCEL-Datei ausgegeben oder in einer dritten Eingabemaske - entsprechend den Wünschen der Bedienperson aufbereitet - angezeigt und/oder ausgegeben werden.

Die vorliegende Erfindung betrifft überdies ein Computerprogramm mit Programmcode-Mitteln, um alle Schritte des erfindungsgemäßen Verfahrens durchzuführen, wenn das Programm auf einem Computer ausgeführt wird. Schließlich betrifft die Erfindung ein Computerprogramm mit Programmcode-Mitteln, wie erwähnt, die auf einem computerlesbaren Datenträger abgespeichert sind.

Weitere vorteilhafte Ausführungsformen ergeben sich aus den Unteransprüchen.

### Beschreibung der Zeichnungen

Ein Ausführungsbeispiel wird im Folgenden unter Hinweis auf die beigefügten Zeichnungen näher beschrieben. Es stellen dar:
- Figur 1: den Aufbau einer Klassifizierungshierarchie für ein Ausführungsbeispiel der Erfindung;
- Figur 2: ein Beispiel für unterschiedliche Objektklassen;
- Figur 3: ein Beispiel für Objektfamilien;
- Figur 4: ein Beispiel für Objektgruppen;
- Figur 5: schematisch und beispielhaft den Aufbau eines Identifikators;
- Figur 6: beispielhaft die Abstraktionsmöglichkeit ausgehend von einem Einzeltyp-ldentifikator;
- Figur 7: beispielhaft das Vorgehen bei Verknüpfung der Einzeltyp-ldentifikatoren der sachorientieren Klassifizierungshierarchie mit den anwendungsorientieren Eigenschaften-Hierarchien;
- Figur 8: eine erste Benutzeroberfläche für die Recherche von Daten;
- Figur 9: eine zweite Benutzeroberfläche für die Recherche von Daten; und
- Figur 10: eine dritte Benutzeroberfläche für die Recherche von Daten.

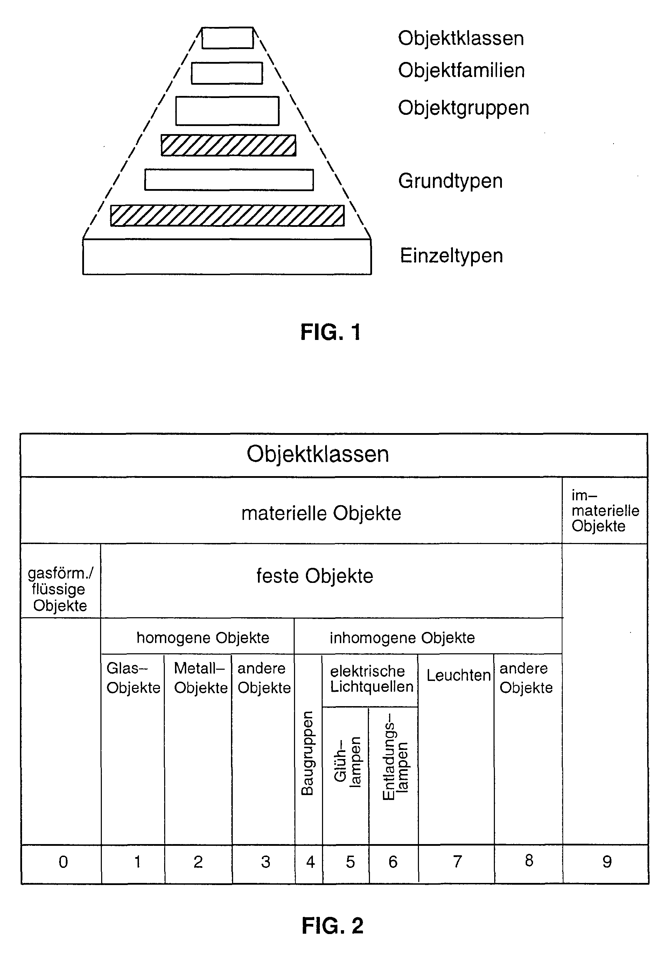

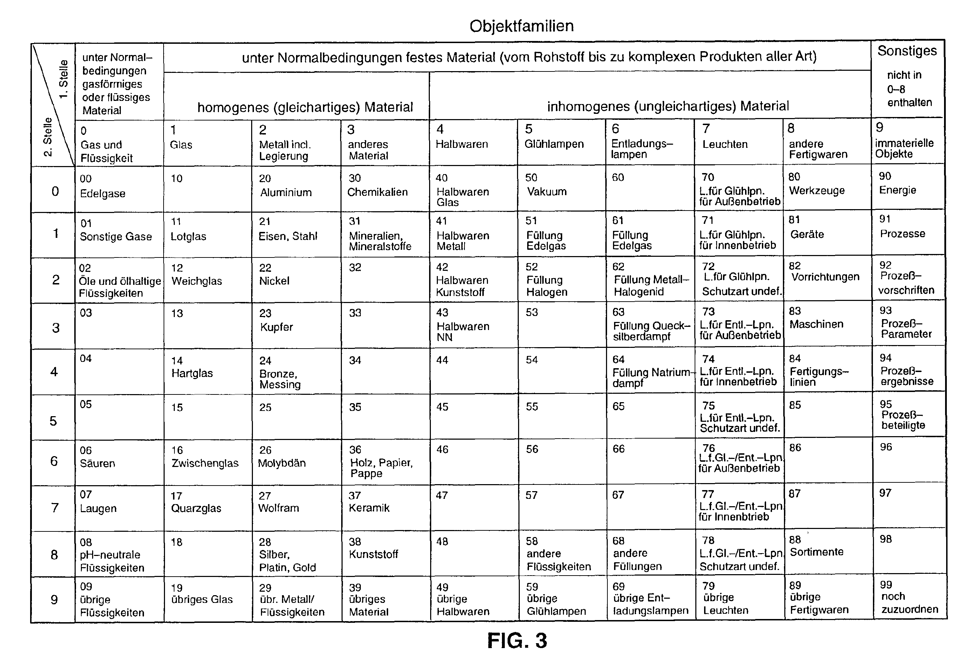

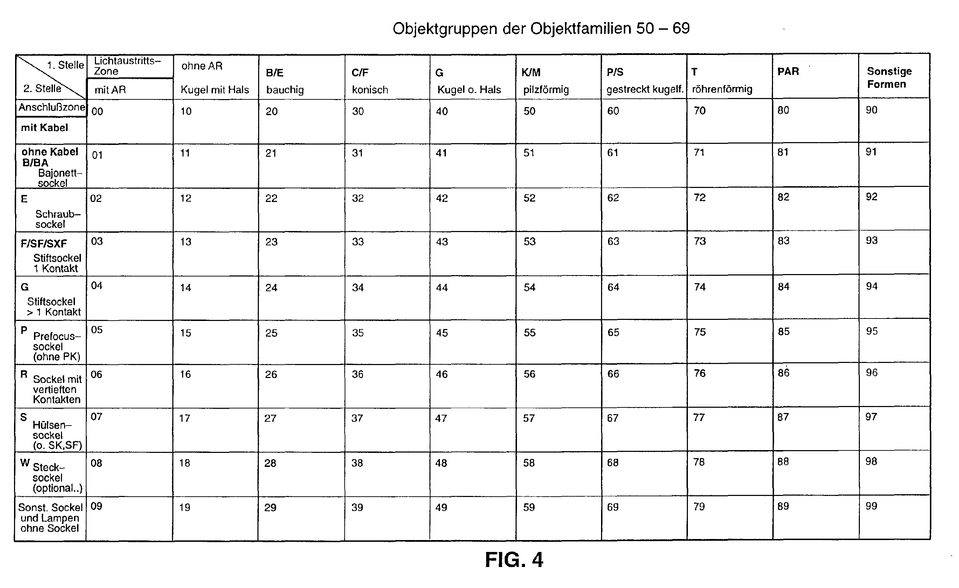

Figur 1 zeigt den Aufbau einer sachorientierten Klassifizierungshierarchie für die Objekte gemäß einem bevorzugten Ausführungsbeispiel der Erfindung. Zunächst werden die einzelnen Objekte in sogenannte Objektklassen eingeteilt, siehe zur Einteilung auch Figur 2. In einem nächsten Schritt, siehe auch Figur 3, werden die Objektklassen in Objektfamilien untergliedert und anschließend, siehe Figur 4, in Objektgruppen. Weitere Untergliederungsstufen können sich anschließen. Schließlich wird ein sogenannter Grundtyp, siehe Figur 1, erhalten, wobei der Grundtyp im Ausführungsbeispiel ein "nacktes Produkt", das heißt ein Produkt ohne Kennzeichnung und ohne Verpackung, identifiziert. Dieser Grundtyp wird in darauffolgenden Untergliederungsstufen durch weitere sachorientierte Objekteigenschaften differenziert. Die Objekte der untersten Klassifizierungsebene, die sogenannten Einzeltypen, umfassen daher die Eigenschaften aller darüber liegenden Ebenen. In entsprechender Weise können auf der Basis von anwendungsorientierten Objekteigenschaften anwendungsorientierte Eigenschaften-Hierarchien aufgebaut werden, um auch hier Redundanz zu vermeiden. Die Verknüpfung zwischen der sachorientierten Klassifizierungshierarchie mit den anwendungsorientierten Eigenschaften-Hierarchien kann insbesondere auf zwei Arten erfolgen: Zum einen können die Einzeltyp-ldentifikatoren der sachorientierten Klassifizierungshierarchie um die dazugehörenden Eigenschafts-Identifikatoren der anwendungsorientierten Eigenschaften-Hierarchien ergänzt werden, so daß sich ein "Gesamtidentifikator" pro Objekt ergibt, in dem alle relevanten Eigenschaften des Objekts niedergelegt sind und damit in einfacher Weise abgefragt werden können. Andererseits können einem Identifikator eines Einzeltyps der sachbezogenen Klassifizierungshierarchie Identifikatoren von Einzeltypen der anwendungsbezogenen Klassifizierungshierarchien zugeordnet sein, so daß bei einer Recherche über diese Zuordnung die zum dem sachbezogenen Identifikator gehörenden anwendungsorientierten Eigenschaften mittelbar abgefragt werden können.

Die Gliederungsstufen der einzelnen Hierarchien werden als Objektarten bezeichnet.

Die in Figur 4 dargestellten Objektgruppen sind eine im Ausführungsbeispiel einheitlich für alle Objektfamilien in den Positionen der Spalten 5 und 6, Reihen 0 bis 9 der Figur 3 gültige Untergliederung (Der damit verbundene Ratioeffekt bei der systematischen Verknüpfung der Klassifizierungsebenen ist grundsätzlich auch bei anderen Objektklassen erzielbar). In entsprechender Weise werden die der jeweiligen Ebene der Klassifizierungshierarchie angehörenden Objekteigenschaften, mit Aufrufbarkeit bisher vorkommender Ausprägungen, einem Benutzer auf einer Eingabemaske angezeigt, um ihn bei der Erfassung der Eigenschaftsausprägungen eines Objekts zu unterstützen. Für neue Ausprägungen von Objekteigenschaften, die bei neuen Elementen auf der betreffenden Hierarchiestufe vorkommen, oder neue Objekteigenschaften, die nur für neue Elemente oder zur nachträglichen weiteren Differenzierung aller Elemente auf der betreffenden Hierarchiestufe benötigt werden, ist eine Erweiterbarkeit des Systems durch dazu berechtigte Personen vorgesehen.

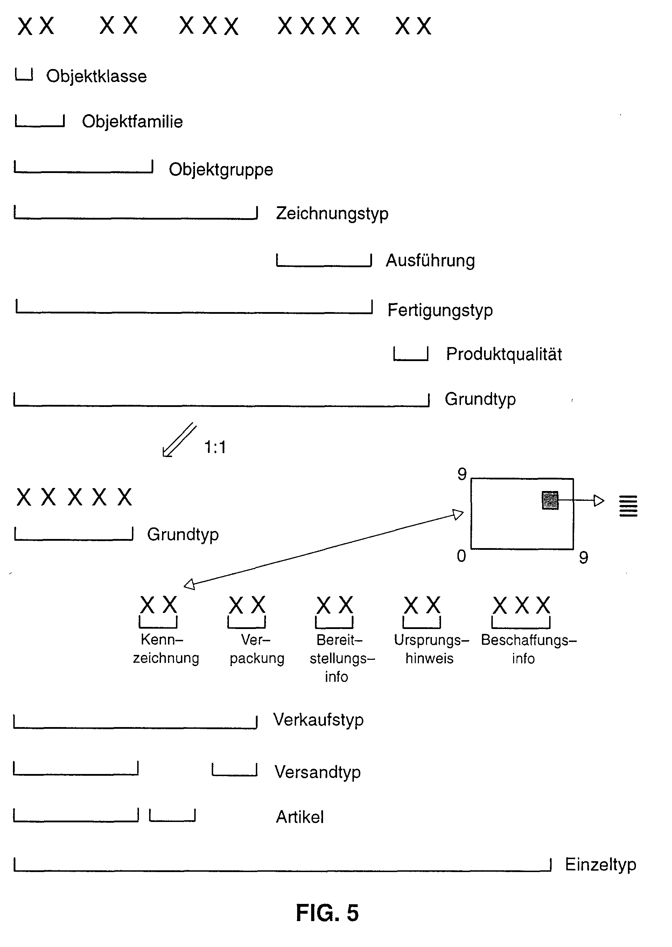

Mit Bezug auf die Figuren 1 bis 4 ist in Figur 5 der sequentielle Aufbau eines Identifikators für einen Einzeltyp dargestellt. Die "X" kennzeichnen Platzhalter für Zahlenwerte. Selbstverständlich können erfindungsgemäß hierfür auch Buchstaben oder andere Symbole verwendet werden. Die erste Stelle des Identifikators bestimmt die Objektklasse, siehe Figur 2, die ersten beiden Stellen die Objektfamilie, siehe Figur 3, während die ersten vier Stellen die Objektgruppe bestimmen, siehe Figur 4. Der sogenannte Zeichnungstyp wird identifiziert durch sieben Stellen: Von diesen sind die ersten vier Stellen die Objektgruppe, denen die Zeichnung des Produkts zugeordnet ist, drei weitere Stellen ermöglichen die Differenzierung der Zeichnungen innerhalb der Objektgruppe nach den zur Produktdefinition herangezogenen zeichnungswirksamen Eigenschaften (insbesondere Formen und Maße) des Produkts. Die nächsten vier Stellen verschlüsseln die Ausführung des Produktes, das heißt alle zur Produktdefinition herangezogenen nicht zeichnungswirksamen Eigenschaften des Produkts (zum Beispiel Materialart, Farbe, Elastizität, elektrische Leitfähigkeit) mit Ausnahme von dessen Qualität. Die Kombination aus Zeichnungstyp und zugehöriger Ausführung bestimmt den sogenannten Fertigungstyp, dem eine Fertigungsstückliste entspricht. Der Grundtyp ergibt sich durch weitere Spezifizierung des Fertigungstyps um die Produktqualität, verschlüsselt mit zwei weiteren Stellen.

Die im Ausführungsbeispiel insgesamt dreizehn Stellen der Grundtyp-Definition werden vom erfindungsgemäßen Verfahren durch eine kurze, für die Grundtyp-ldentifikation alternativ verwendbare, fortlaufend vergebene Nummer ergänzt. Im Ausführungsbeispiel umfaßt diese Nummer mit Rücksicht auf die Gesamtzahl der zu berücksichtigenden Produkte (Roh-, Halbund Fertigwaren) fünf alphanumerisch belegbare Stellen, so daß über 50 Millionen unterschiedliche Grundtypen benummert werden können. Da diese kurze Nummer insbesondere bei der Datenerfassung bevorzugt wird und dort zum Beispiel "Zahlendreher" vorkommen können, wird vom erfindungsgemäßen Verfahren bei Festlegung der laufenden Nummer ein algorithmisch festgelegtes Prüfzeichen ergänzt: Ergibt dieser Algorithmus bei späterer Anwendung auf eine erfaßte laufende Nummer ein Resultat, das vom gleichzeitig erfaßten Prüfzeichen abweicht, ist hieran ein Erfassungsfehler erkennbar und der Anstoß zu dessen Korrektur gegeben.

Die weitere Differenzierung des Grundtyps wird durch Kombination des Grundtyps mit Gruppen von Objekteigenschaften tiefer liegender Ebenen der Klassifizierungshierarchie dargestellt. So wird im Ausführungsbeispiel
- die Ebene "Versandtyp" durch die Kombination von Grundtyp und der als
- "Verpackungstyp" bezeichneten, durch drei Stellen repäsentierten Gruppe verpackungsorientierter Objekteigenschaften,
- die Ebene "Verkaufstyp" durch die Kombination von Versandtyp und der als "Kennzeichnungstyp" bezeichneten, durch zwei Stellen repäsentierten Gruppe kennzeichnungsorientierter Objekteigenschaften,
- die Ebene "Einzeltyp" durch die Kombination von Verkaufstyp und der als "Beschaffungstyp" bezeichneten Gruppe beschaffungsorientierter Objekteigenschaften
bestimmt. Die erwähnten Stellen verweisen in einer jeweils zugehörigen Matrix auf die ihnen zugeordnete Kombination von Ausprägungen der zugehörigen Objekteigenschaften.

Hinter den mehrstelligen Schlüsseln für den Verpackungs- und den Kennzeichnungstyp steht jeweils ein bestimmtes, dokumentierbares Konzept für die Verpackung und Kennzeichnung, das in Verbindung mit der jeweiligen Bezugsbasis, nämlich
- mit dem Grundtyp beim Versandtyp,
- mit dem Versandtyp beim Verkaufstyp und
- mit dem Verkaufstyp beim Einzeltyp,
eine konkrete, dokumentierbare Bedeutung erlangt. Sieht der Kennzeichnungstyp zum Beispiel eine Kennzeichnung mit dem beim jeweiligen Hersteller standardmäßig zu verwendenden Ursprungshinweis vor, dann lautet dieser, falls das Produkt laut Beschaffungstyp in Deutschland hergestellt wird, konkret "Made in Germany".

Die jeweiligen Dokumente beziehen sich zur Redundanzvermeidung bevorzugt unmittelbar auf die Identifikatoren der Verpackungs-, Versand-, Kennzeichnungs-, Verkaufs- und Einzeltypen.

Die Anzahl der Ebenen der sachorientierten Klassifizierungshierarchie sowie etwaiger Eigenschaften-Hierarchien, Anzahl der Objekteigenschaften und damit Tiefenschärfe der Definition der Elemente in den einzelnen Ebenen mit dadurch beeinflußter Anzahl dieser Elemente sowie die Stellenanzahl zur Verschlüsselung dieser Elemente kann in anderen Anwendungsbeispielen der vorliegenden Erfindung selbstverständlich anderen Kriterien folgen als im hier beschriebenen Ausführungsbeispiel und damit von diesem so abweichen, daß es sich im Aufbau des Einzeltyp-ldentifikators widerspiegelt. Bevorzugt ist erfindungsgemäß jedoch darauf zu achten, daß eine der logischen Datenstruktur entsprechende Klassifizierungshierarchie festgelegt wird und daß auf allen Ebenen, beginnend bei den Objektklassen, die zu verschlüsselnden Elemente so definiert werden, daß sich die Definitionen nicht überschneiden, sondern gegenseitig ausschließen. Nur so entsteht eine redundanzfreie, zukunftssichere, von Bedienpersonen oder sonstigen Einflüssen unabhängige Eineindeutigkeit der Datenbeziehungen.

Die Eingabe der entsprechenden Daten zur Erzeugung eines Identifikators kann durch Bereitstellen einer Eingabemaske für eine Bedienperson unterstützt werden, wobei vorgesehen sein kann, daß in die Eingabemaske Mußund Kanndaten eingebbar sind. Bevorzugt wird hierbei die Eingabe der Mußdaten überwacht und sichergestellt.

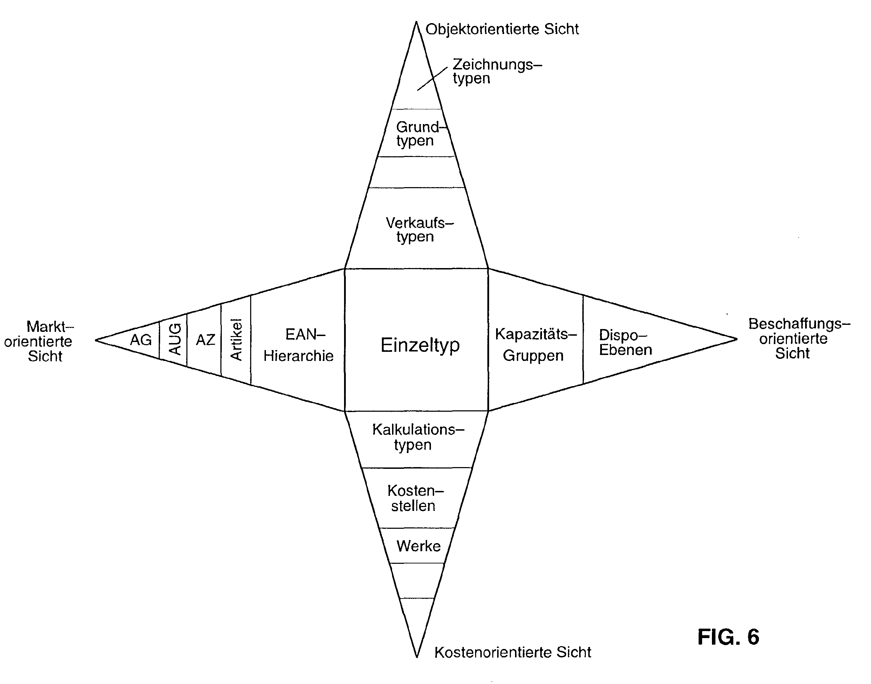

Durch einen Filter, auf dessen Erzeugung an späterer Stelle nochmals eingegangen wird, lassen sich die Elemente einer ausgewählten Objektart, das heißt einer Ebene der sachorientierten Klassifizierungshierarchie oder einer Ebene einer der anwendungsorientierten Eigenschaften-Hierarchien, zum Beispiel die als Einzeltypen repräsentierten Objekte, auffinden, die vorzugebenden Kriterien entsprechen. Bei Einzeltypen kann auch verlangt werden, daß gleichzeitig Kriterien aus objektorientierter Sicht und/oder aus marktorientierter Sicht und/oder aus kostenorientierter Sicht und/oder aus beschaffungsorientierter Sicht erfüllt sein müssen, siehe hierzu Figur 6. Infolge der im Einzeltyp repräsentierten Objekteigenschaften kann der zu beachtende Kriterienkatalog zum Beispiel eine bestimmte Kapazitätsgruppe aus der beschaffungsorientierten Sicht und eine bestimmte Kostenstelle aus der kostenorientierten Sicht enthalten. Bei Beschränkung auf nur ein Auswahlkriterium lassen sich die Einzeltypen auswählen, die zu vorzugebenden Kalkulationstypen oder Kostenstellen oder - in einer noch höheren Abstraktionsebene zu Werken gehören, die - aus marktorientierter Sicht - zu einer vorzugebenden EAN oder einem vorzugebenden Artikel gehören oder die - aus objektorientierter Sicht - von einem vorzugebenden Verkaufstypen, Grundtypen oder - in einer noch höheren Abstraktionsebene - einem vorzugebenden Fertigungstypen oder Zeichnungstypen abstammen.

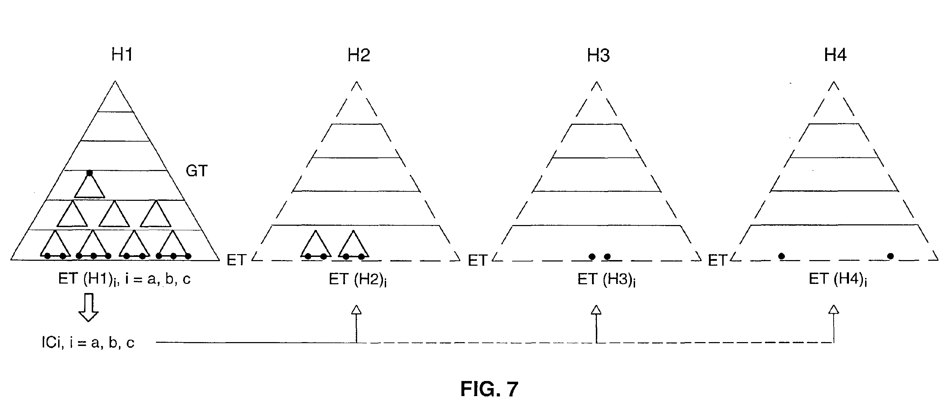

In Figur 7 ist beispielhaft eine Variante dargestellt, wie die Einzeltyp-Identifikatoren der sachorientierten Klassifizierungshierarchie mit den anwendungsorientierten Eigenschaften-Hierarchien verknüpft werden können.

Hierarchie H1 ist hierbei die sachorientierte Klassifizierungshierarchie, wobei beispielhaft die Ebene Grundtyp (GT) und die Ebene Einzeltyp (ET) eingezeichnet sind. Einem bestimmten Grundtypen, gekennzeichnet durch einen Punkt auf der Ebene GT, sind eine Vielzahl von Einzeltypen (ET) zugeordnet, erkennbar durch die Punkte auf der untersten Ebene. Zwischen der Ebene Grundtyp und der Ebene Einzeltyp können weitere Ebenen liegen. Jedem dieser Einzeltypen ET(H1)ᵢ, i = a, b, c, ... entspricht eine mit ICᵢ, i = a, b, c, ... bezeichnete Nummer, die sich daraus ergibt, daß alle Einzeltypen durchnummeriert werden.

Die Hierarchien H2, H3 und H4 repräsentieren drei anwendungsorientierte Eigenschaften-Hierarchien. Sie werden unter Anwendungsgesichtspunkten - im Regelfall wie die sachorientierte Klassifizierungshierarchie ebenfalls topdown - festgelegt, wobei von sinnvoll den Anwenderbedürfnissen angepaßten Oberbegriffen zu den bei den Einzeltypen vorgefundenen oder zu erwartenden anwendungsorientierten Objekteigenschaften ausgegangen wird, die ihrerseits nicht in der sachorientierten Klassifizierungshierarchie vertreten sind. Zwischen dem an der Hierarchiespitze stehenden, am wenigsten differenzierenden Oberbegriff und den beim Einzeltyp auftretenden anwendungsorientierten Objekteigenschaften können sich mehrere Eigenschaften-Ebenen befinden, die aus Sicht der anwendungsorientierten Objekteigenschaften der Einzeltypen ebenfalls Oberbegriffe darstellen, allerdings stärker differenzierend als die Oberbegriffe an der Hierarchiespitze.

Die unterste Ebene einer anwendungsorientierten Eigenschaften-Hierarchie hat im Regelfall einen anderen Differenzierungsgrad als die unterste Ebene der sachorientierten Klassifizierungshierarchie. Da die anwendungsorientierten Eigenschaften-Hierarchien aber dem Zweck dienen, auch die nicht in die sachorientierte Klassifizierungshierarchie einfügbaren Objekteigenschaften redundanzfrei oder zumindest redundanzarm zu speichern und damit wirtschaftlich und gleichzeitig zukunftssicher vorzuhalten, müssen die Elemente in deren untersten Ebenen mit den Einzeltypen der sachorientierten Klassifizierungshierarchie verknüpft werden. Dies geschieht, indem den am meisten differenzierenden Elementen, das sind im Regelfall die Einzeltypen, die zugehörigen Elementen auf der untersten Ebene der anderen Hierarchien zugeordnet werden. Diese Zuordnung kann vom erfindungsgemäßen Verfahren unterstützt werden, zumindest insoweit, als zum Beispiel alle Einzeltypen, die einem Element einer der anwendungsorientierten Eigenschaften-Hierarchien zugeordnet werden, nur diesem und keinem weiteren Element dieser Hierarchie zugeordnet werden können. Als weitere Unterstützung kommen im erfindungsgemäßen Verfahren zu hinterlegende Entscheidungshilfen in Frage, deren Gestaltung von den unternehmensinternen Voraussetzungen abhängt. Außerdem ist zu verlangen, daß jeder Einzeltyp mit den anwendungsorientierten Eigenschaften-Hierarchien verknüpft wird. In Figur 7 wird dies symbolisch zum Ausdruck gebracht, indem Pfeile von einer Gruppe von Einzeltypen der Hierarchie H1, repräsentiert durch deren IC, zu bestimmten Einzeltypen der Hierarchie H2, der Hierarchie H3 und der Hierarchie H4 führen.

In einem bevorzugten Ausführungsbeispiel hat die jedem der Einzeltypen ET(H1)ᵢ, i=a, b, c, ... der Hierarchie H1 zugeordnete Nummer ICᵢ, i=a, b, c, ... Entsprechungen in den anwendungsorientierten Klassifizierungshierarchien H2, H3, H4. Bei der Zuordnung der Zahlen ICᵢ zu Einzeltypen der Hierarchie H2, ET(H2)ᵢ, der Klassifizierungshierarchie H3, ET(H3)ᵢ, sowie der Klassifizierungshierarchie H4, ET(H4)ᵢ können mehrere Zahlenwerte ICᵢ demselben Einzeltyp-ldentifikator der entsprechenden Hierarchie zugeordnet werden. Wichtig ist, daß jedenfalls eine Zuordnung stattfindet. Für Elemente, die in der entsprechenden Hierarchie keine Entsprechung finden, können Dummy-Einzeltyp-ldentifikatoren bereitgestellt werden.

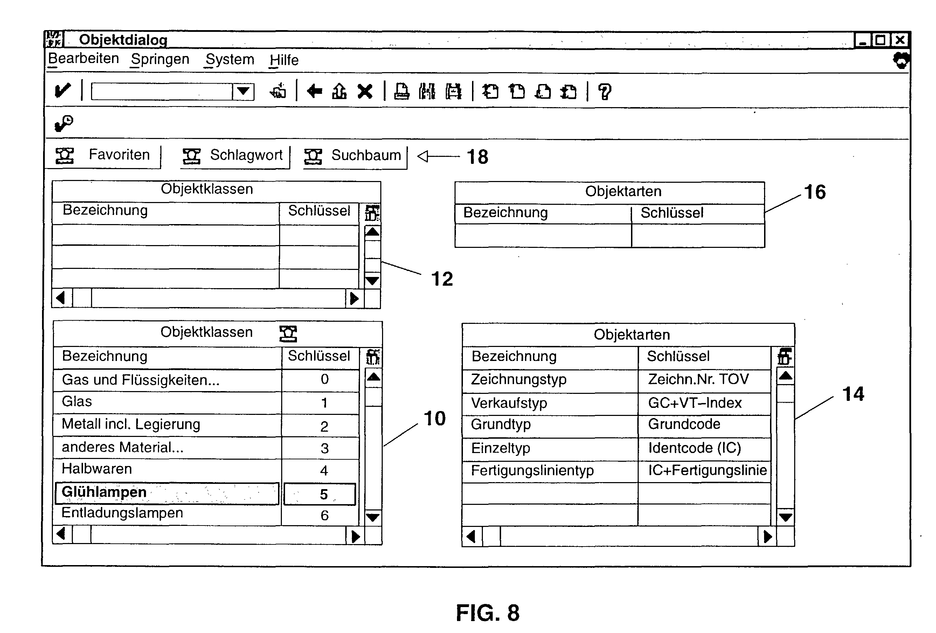

Die Recherche nach Daten wird nunmehr mit Bezug auf die Figuren 8 bis 10 erörtert: In Figur 8 ist eine erste Benutzeroberfläche für die Recherche nach Daten dargestellt. Aus einem Feld 10 können Objektklassen von einem Benutzer ausgewählt werden, die dann vom Verfahren, d.h. automatisch, in Feld 12 eingetragen werden. In entsprechender Weise lassen sich aus dem Feld 14 Objektarten auswählen, die dann vom Verfahren in das Feld 16 eingetragen werden. Über die Felder 18 lassen sich andere Recherchekriterien auswählen, beispielsweise Schlagworte, die dann vom Verfahren zu einem nach Objektklasse und Objektart definierten Datenbereich umgewandelt werden. Auch kann - als weitere Alternative - ein bei einer früheren Recherche als "Favorit" abgespeicherter Filter aus dem Verzeichnis "Favoriten" wieder abgerufen werden, so daß seine erneute Definition entfällt.

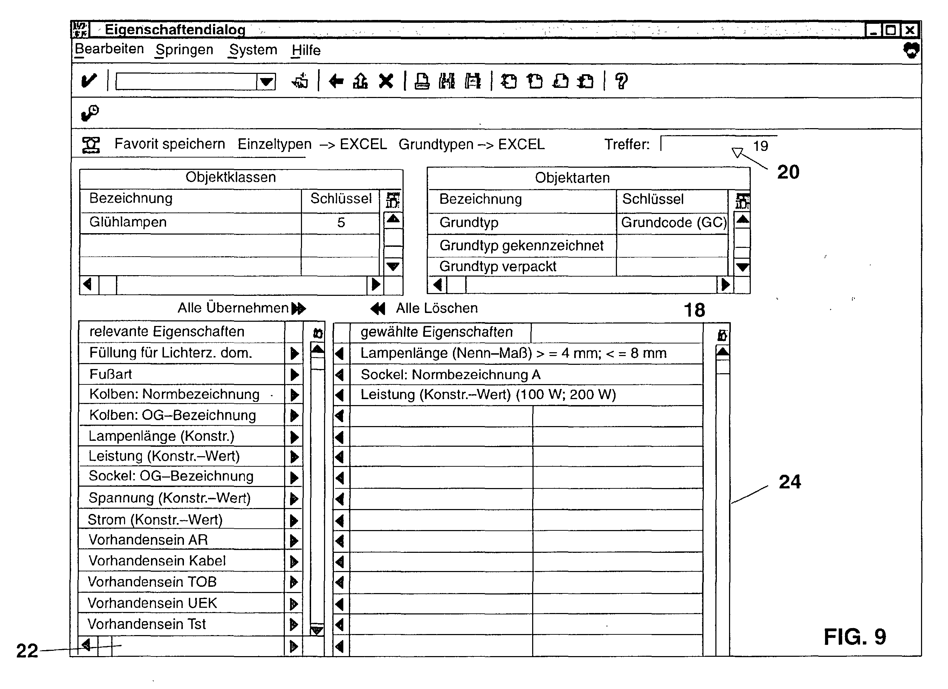

Nachdem in Figur 8 der Datenbereich abgesteckt ist, in dem recherchiert werden soll, zeigt das Verfahren gemäß der Benutzeroberfläche von Figur 9 vor der Festlegung weiterer Auswahlkriterien im Feld 20 als Treffer zunächst die Gesamtzahl der Elemente an, die sich in diesem Datenbereich befinden. Im Feld 22 werden für die Recherche relevante Eigenschaften der Treffer gemäß dieser Vorauswahl angezeigt, aus denen ausgewählt werden kann. Es sind dies Elemente aus Hierarchie-Ebenen, die oberhalb des definierten Datenbereiches liegen und/oder recherchierbare Eigenschaften der als Treffer angezeigten Elemente. Zu den ausgewählten Elementen und Eigenschaften, die das Verfahren in das Feld 24 überträgt, sind vom Benutzer die Objekteigenschaften oder deren Ausprägungen anzugeben, nach denen recherchiert werden soll. Dies können konkrete Ausprägungen sein (zum Beispiel zur Eigenschaft "Sockel" die Ausprägung "E27"), aber auch Bedingungen wie zum Beispiel Bereichsangaben (Beispiel zu Sockeln: "E14-E27"), Mindest- oder Höchstwerte (Beispiele zur Lampenlänge: "<20mm" oder ">80mm"). Dies führt im Regelfall zu einer Reduzierung der Treffer. Es besteht die Möglichkeit, falls das Rechercheergebnis nicht zufriedenstellend ist, auf einen vorhergehenden Verfahrensschritt zurückzuspringen, um andere Objektklassen, Objektarten, Elemente, Objekteigenschaften oder Ausprägungen der zu recherchierenden Elemente und/oder Objekteigenschaften zur Veränderung der Auswahl zu spezifizieren.

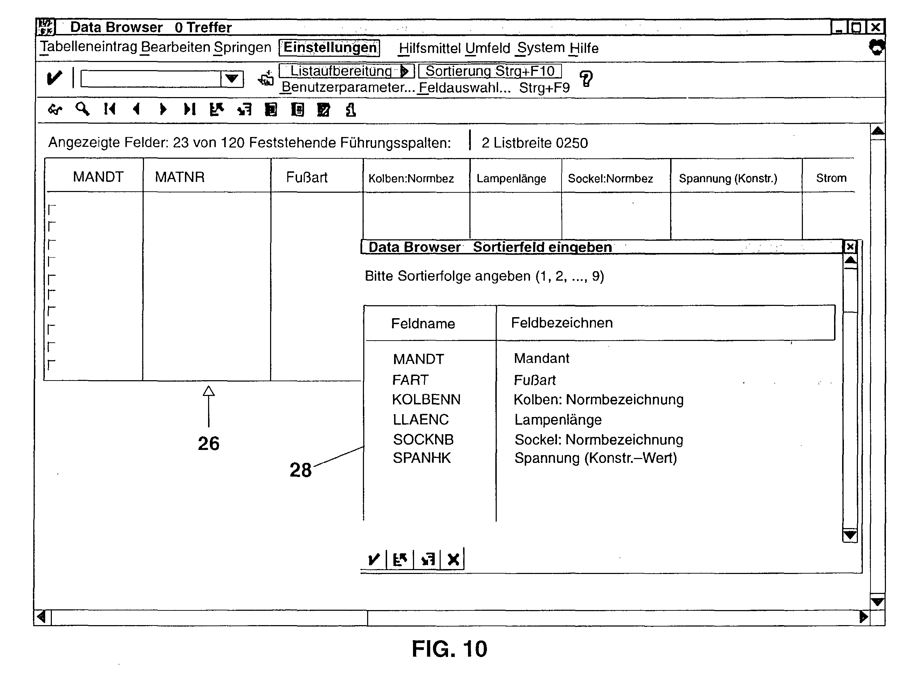

Nach Beendigung der Selektion, das heißt nach Abschluß des Selektionsprozesses, kann wahlweise gemäß Figur 9 oder 10 die Ausgabe des Rechercheergebnisses bewirkt werden. Zur Auswahl steht bevorzugt die Anzeige des Ergebnisses am Bildschirm, die Ausgabe in Listenform auf Papier oder die Ausgabe auf einen anderen Datenträger in einem für die weitere Verarbeitung geeigneten Format. Vor der Ausgabe kann sich der Benutzer für eine Standardaufbereitung des Ergebnisses entscheiden oder eine andere Aufbereitung wählen. Dabei kann - einheitlich für alle Treffer, das sind alle im Ergebnis enthaltenen Datensätze
- auf die Anzeige oder Ausgabe einzelner in den Treffern enthaltener Datenfelder verzichtet,
- die Reihenfolge der aus den Treffern anzuzeigenden oder auszugebenden Datenfelder verändert und
- die Reihenfolge der Trefferanzeige oder Trefferausgabe durch Sortiervorgaben beeinflußt
werden. Die Standardreihenfolge der Trefferanzeige oder Trefferausgabe richtet sich nach der Reihenfolge der Datenfelder in den Treffern. Eine andere Reihenfolge der Trefferanzeige oder Trefferausgabe kann der Benutzer über ein Feld 28 vorgeben.

## Patentansprüche

1. Verfahren zur Verwaltung und Recherche von Daten, die Objekte eines physikalischen Systems betreffen, folgende Schritte umfassend:
- Definition zumindest einer Klassifizierungshierarchie für die Objekte, wobei die Elemente einer unteren Klassifizierungsebene der Klassifizierungshierarchie alle Objekteigenschaften aller darüber liegenden Klassifizierungsebenen derselben Klassifizierungshierachie umfassen;
- Definition einer untersten Klassifizierungsebene der Objekte;
- Darstellung der Objekte der untersten Klassifizierungsebene durch Codierung in einen Identifikator, wobei der Identifikator derart aufgebaut ist, daß sich unterschiedliche Filter entsprechend unterschiedlichen Abstraktionsregeln auf ihn anwenden lassen.

2. Verfahren nach Anspruch 1,
**dadurch gekennzeichnet,**
**daß** zumindest Objekte einer Klassifizierungsebene ungleich der untersten ebenfalls durch Identifikatoren codiert sind, wobei auch diese Identifikatoren derart aufgebaut sind, daß sich unterschiedliche Filter entsprechend unterschiedlichen Abstraktionsregeln auf sie anwenden lassen, und wobei dem Identifikator eines Objekts der höheren Klassifizierungsebene die Identifikatoren der in der Klassifizierungshierarchie darunter liegenden Klassifizierungsebenen, insbesondere ebenenweise bis zur untersten Klassifizierungsebene, zugeordnet werden.

3. Verfahren nach Anspruch 1 oder 2,
**dadurch gekennzeichnet,**
**daß** jedes Objekt des physikalischen Systems durch genau einen Identifikator repräsentiert wird.

4. Verfahren nach einem der Ansprüche 1 bis 3,
**gekennzeichnet durch** folgende weitere Schritte:
- Analyse der Beziehungen zwischen mindestens zwei Objekten;
- in Anbetracht des Ergebnisses der Analyse: Definition von Objekteigenschaften der Objekte.

5. Verfahren nach einem der vorhergehenden Ansprüche,
**gekennzeichnet durch** folgenden weiteren Schritt:
- Unterstützen der Erfassung der Objekte mit ihren Objekteigenschaften **durch** Bereitstellen einer Eingabemaske, wobei in die Eingabemaske zur Erzeugung eines Identifikators Muß- und Kanndaten eingebbar sind, wobei zumindest die Eingabe der Mußdaten überwacht und sichergestellt wird.

6. Verfahren nach einem der vorhergehenden Ansprüche,
**dadurch gekennzeichnet,**
**daß** mindestens zwei Klassifizierungshierarchien definiert werden, wobei mindestens ein Identifikator der ersten Klassifizierungshierarchie eine Entsprechung in der mindestens einen zweiten Klassifizierungshierarchie aufweist.

7. Verfahren nach einem der Ansprüche 5 oder 6,
**dadurch gekennzeichnet,**
**daß** bei der Erfassung der Objekte mit einer Eingabemaske die Eigenschaften des Objekts in den unterschiedlichen Klassifizierungshierarchien erfaßt werden und Verknüpfungen betreffend das erfaßte Objekt zwischen den unterschiedlichen Klassifizierungshierarchien und innerhalb der jeweiligen Klassifizierungshierarchien, insbesondere mit der über und unter der Eingabeebene liegenden Klassifizierungsebenen, hergestellt werden.

8. Verfahren nach Anspruch 6,
**dadurch gekennzeichnet,**
**daß** eine Klassifizierungshierarchie sachorientiert ist und mindestens eine weitere Klassifizierungshierarchie anwendungsorientiert.

9. Verfahren nach Anspruch 8,
**dadurch gekennzeichnet,**
**daß** Objekte der untersten Klassifizierungsebene, sogenannte Einzeltypen, der sachorientierten Klassifizierungshierarchie objektorientierte Eigenschaften aufweisen.

10. Verfahren nach Anspruch 8 oder 9,
**dadurch gekennzeichnet,**
**daß** Objekte der untersten Klassifizierungsebene der mindestens einen anwendungsorientierten Klassifizierungshierarchie zumindest Objekteigenschaften aufweisen, die eine Auswahl aus den folgenden Gebieten umfassen:
- marktorientierte Objekteigenschaften;
- beschaffungsorientierte Objekteigenschaften;
- kostenorientierte Objekteigenschaften.

11. Verfahren nach Anspruch 9,
**dadurch gekennzeichnet,**
**daß** die objektorientierten Objekteigenschaften Informationen enthalten zum Zeichnungstyp und/oder zur zeichnungsunwirksamen Ausführung und/oder zur Qualität des Objekts und/oder zu dessen Verpackung und/oder zur Kennzeichnung von Objekt und Verpackung.

12. Verfahren nach Anspruch 10 oder 11,
**dadurch gekennzeichnet,**
**daß** die marktorientierten Objekteigenschaften Informationen enthalten zur EAN-Hierarchie und/oder zum Artikel und/oder zu Artikelgruppierungen des Objekts.

13. Verfahren nach einem der Ansprüche 10 bis 12,
**dadurch gekennzeichnet,**
**daß** die beschaffungsorientierten Objekteigenschaften Informationen enthalten zur Beschaffungsart und/oder zum Konfektionierungsort und/oder zum Ursprungshinweis und/oder zur Beistellungsart und/oder zum bilanziellem Ursprung und/oder zu Kapazitätsgruppen und/oder zu Dispositionsstufen des Objekts.

14. Verfahren nach einem der Ansprüche 10 bis 13,
**dadurch gekennzeichnet,**
**daß** die kostenorientierten Objekteigenschaften Informationen enthalten zur Kalkulationsart und/oder zur Kostenstelle und/oder zum Herstellungswerk des Objekts.

15. Verfahren nach einem der vorhergehenden Ansprüche,
**dadurch gekennzeichnet,**
**daß** die oberste Klassifizierungsebene, insbesondere der sachorientierten Klassifizierungshierarchie, sogenannte Objektklassen sind, in die alle Objekte, insbesondere auch immaterielle Objekte, einordenbar sind.

16. Verfahren nach Anspruch 15,
**dadurch gekennzeichnet,**
**daß** zwischen einer Objektklasse und der untersten Klassifizierungsebene weitere Klassifizierungsebenen vorhanden sind, ausgehend von der Klassifizierungsebene Objektklasse insbesondere die Klassifizierungsebene Objektfamilie und daran anschließend die Klassifizierungsebene Objektgruppe.

17. Verfahren nach einem der vorhergehenden Ansprüche,
**dadurch gekennzeichnet,**
**daß** mindestens eine vorgegebene Klassifizierungsebene von einer dazu berechtigen Person um mindestens ein Element dieser Klassifizierungsebene erweiterbar ist.

18. Verfahren nach einem der vorhergehenden Ansprüche,
**dadurch gekennzeichnet,**
**daß** jeder Identifikator aus einem Basisteil und mindestens einem Zusatzteil aufgebaut ist, derart, daß der Basisteil und/oder der mindestens eine Zusatzteil durch die unterschiedlichen Filter abprüfbar sind.

19. Verfahren nach Anspruch 18,
**dadurch gekennzeichnet,**
**daß** der mindestens eine Zusatzteil sachorientierten und/oder anwendungsorientierten, insbesondere objektorientierten und/oder marktorientierten und/oder beschaffungsorientierten und/oder kostenorientierten Objekteigenschaften entspricht.

20. Verfahren nach einem der vorhergehenden Ansprüche,
**dadurch gekennzeichnet,**
**daß** beim Aufbau der Identifikatoren relative und/oder absolute Schlüssel verwendet werden.

21. Verfahren nach einem der vorhergehenden Ansprüche,
**dadurch gekennzeichnet,**
**daß** alle Identifikatoren in einer einzigen Datenbank zusammengefaßt sind.

22. Verfahren nach einem der vorhergehenden Ansprüche,
**dadurch gekennzeichnet,**
**daß** für die Recherche ein Filter erzeugt und auf die Identifikatoren angewendet wird.

23. Verfahren nach Anspruch 22,
**dadurch gekennzeichnet,**
**daß** für die Erzeugung des Filters eine Eingabemaske bereitgestellt wird, in die eine Bedienperson sie interessierende Elemente mindestens einer Klassifizierungsebene und/oder sie interessierende Objekteigenschaften eingeben kann.

24. Verfahren nach Anspruch 23,
**dadurch gekennzeichnet,**
**daß** zur Eingabe der die Bedienperson interessierenden Elemente und/oder Objekteigenschaften Auswahlmenüs auf der Eingabemaske angezeigt werden, aus denen die Bedienperson auswählen kann.

25. Verfahren nach Anspruch 23 oder 24,
**dadurch gekennzeichnet,**
**daß** das Filter in Anbetracht der von der Bedienperson eingegebenen Elemente und/oder Objekteigenschaften erzeugt wird, und die Identifikatoren auf die Erfüllung der Filtereigenschaften geprüft werden, wobei das Ergebnis, d.h. die Objekte, deren Identifikatoren die Filtereigenschaften erfüllen, der Bedienperson bereitgestellt wird.

26. Verfahren nach Anspruch 25,
**dadurch gekennzeichnet,**
**daß** das Ergebnis durch Eingabe weiterer Objekteigenschaften durch die Bedienperson und Erzeugung eines weiteren Filters, der dann auf die Identifikatoren angewendet wird, weiter spezifizierbar ist.

27. Computerprogramm mit Programmcode-Mitteln, um alle Schritte eines Verfahrens nach einem der Ansprüche 1 bis 26 durchzuführen, wenn das Programm auf einem Computer ausgeführt wird.

28. Computerprogramm mit Programmcode-Mitteln nach Anspruch 27, die auf einem computerlesbaren Datenträger abgespeichert sind.
